(19) Europäisches Patentamt
European Patent Office
Office européen des brevets

(11) **EP 1 673 597 B1**

(12) **EUROPEAN PATENT SPECIFICATION**

(45) Date of publication and mention
of the grant of the patent:
**25.07.2012 Bulletin 2012/30**

(51) Int Cl.:
***G01F 17/00*** (2006.01)

(21) Application number: **04770794.8**

(22) Date of filing: **17.09.2004**

(86) International application number:
**PCT/IT2004/000508**

(87) International publication number:
**WO 2005/031281 (07.04.2005 Gazette 2005/14)**

(54) **METHOD AND APPARATUS FOR DETERMINING THE VOLUME OF A CONTAINER THROUGH PERMEATION MEASURES**

VERFAHREN UND VORRICHTUNG ZUR BESTIMMUNG DES VOLUMENS EINES BEHÄLTERS DURCH PERMEATIONSMASSE

PROCEDE ET APPAREIL POUR DETERMINER LE VOLUME D'UN RECIPIENT PAR DES MESURES DE PERMEATION

(84) Designated Contracting States:
**AT BE BG CH CY CZ DE DK EE ES FI FR GB GR HU IE IT LI LU MC NL PL PT RO SE SI SK TR**

(30) Priority: **01.10.2003 IT RM20030452**
**21.07.2004 IT RM20040369**

(43) Date of publication of application:
**28.06.2006 Bulletin 2006/26**

(73) Proprietor: **ENEA - ENTE PER LE NUOVE TECNOLOGIE,**
**L'ENERGIA E L'AMBIENTE**
**00196 Roma (IT)**

(72) Inventors:
• **TOSTI, Silvano**
**Enea-Ente per le Nuove Tecnologie**
**Thaon Di Revel 76,**
**I-00196 Roma (IT)**

• **BETTINALI, Livio**
**Enea-Ente per le Nuove Tecnologie**
**Thaon Di Revel 76,**
**I-00196 Roma (IT)**
• **LECCI, Domenico**
**Enea-Ente per le Nuove Tecnologie**
**Thaon Di Revel 76,**
**I-00196 Roma (IT)**
• **GIORDANO, Francesca**
**Enea-Ente per le Nuove Tecn.**
**Thaon Di Revel 76,**
**I-00196 Roma (IT)**

(74) Representative: **Banchetti, Marina et al**
**Barzanò & Zanardo Roma S.p.A.**
**Via Piemonte 26**
**00187 Roma (IT)**

(56) References cited:
**FR-A- 2 602 588        US-A- 4 354 383**
**US-A- 4 763 518        US-A- 4 770 033**
**US-A1- 2003 070 487**

**Description**

The present invention concerns a method and an apparatus for determining the volume of a container through permeation measures. More specifically, the invention concerns a process enabling the measurement of the internal volume of any vessel, however complex, and even if not gastight, by simply connecting the said vessel to a device consisting of a membrane, a porous baffle or calibrated hole and a pressure gauge, and connected to a measuring gas supply via an on-off valve.

In many chemical applications, both at an industrial level and experimental or laboratory level, the problem may arise of accurately determining the internal volume of a vessel or reaction chamber, for example, in order to precisely know the operative parameters of the reaction underway or to produce gaseous or liquid mixtures of a known concentration. For example, accurate determinations of vessel volume are required in applications in the field of experimental physics and metrology (in the use of experimental chambers or for the preparation of standard or reference mixtures) and in industrial applications such as for dosages in the fine chemicals industry and in the pharmaceutical industry.

Only in the case of regular shaped containers with a very simple geometry can the volume be ascertained from construction diagrams or working drawings (when they are available), while in most cases one must resort to indirect methods. It must be borne in mind that, above all but not exclusively in experimental applications, initially regular shaped vessels are often extended by connections to measurement devices, pipe-fittings, valves etc., whose internal volume ends up by not being negligible in respect to the volume of the reaction chamber, and which must thus be taken into account. In other cases, some of these measurement devices are placed inside the chamber itself, thus reducing the volume available in an unknown manner that is not easy to determine. It may also be that additional devices are connected only at a certain stage of the experimentation or process, so that the internal volume undergoes a variation with respect to the one known at the outset.

The indirect measurement systems for the internal volume of containers most often used in the aforesaid cases are of the gravimetric type, based on filling the vessel concerned with liquids of known density, such as water or mercury, in controlled temperature conditions, and then weighing the liquid introduced. Although accurate, these procedures present some drawbacks that may advise against their use in certain cases, such as vessel contamination, operational difficulties (for example, the forming of gas pockets and bubbles) and the corrosiveness of the used liquid for vessel walls.

Other methods for determining the internal volume of a vessel or cavity that are proposed or suggested in the patent literature are based on the measurement of gaseous volumes (more often it is the measurement of the free volume of a liquid-containing tank of known capacity, in order to determine the extent to which it is filled), and using the known laws on gases, such as Boyle's law (PV = constant at a constant temperature, where P stands for pressure and V stands for volume) and the state equation of ideal gases (PV = nRT, where P and V are as above and n is the ratio between the mass of gas and its molecular weight, T is absolute temperature and R is the gas constant). Examples of similar methods are described in international patent applications No. WO 88/09484 (Metator KB) and No. WO 91/05510 (Nat. Res. Development Corp.). Since the methods of this type use measures of fundamental physical quantities (such as pressure and temperature) conducted in thermodynamic equilibrium conditions, they normally require relatively long measurement times. Furthermore, these methods are only applicable to gastight vessels and cannot be used for vessels where the internal volume to be measured presents non-negligible gas leakages.

In view of the above, an object of the present invention is to provide a system for measuring the internal volume of containers or vessels (such as tanks, pipes, valves, cavities, apparatuses and experimental chambers) that overcomes the drawbacks found with conventional gravimetric methods, firstly by avoiding the risks of vessel contamination and also by offering a high degree of accuracy in measurement, despite being easy and practical to carry out and requiring inexpensive devices. To this end, the present invention uses an original application of the laws for mass transfer through membranes or porous baffles, and develops a volume determination system based on the application of these laws and on the direct measurement of time, pressure and temperature. With the due variants, the system can be applied to determine the internal volume of both gastight vessels and vessels with non-negligible gas leakages.

In synthesis, the proposed procedure envisages the use of a measurement system consisting of a membrane or porous baffle, or diaphragm having known permeability, and a pressure measurement device, and, in the simplest version, is equipped with a timer and a thermometer.

As is known, in steady state conditions the permeation of a gas through a device consisting of a porous baffle or diaphragm (hereinafter referred to as a membrane for simplicity) is regulated by mass transfer mechanisms according to the following law:

$$F = \varphi \, (p_{up} - p_{down}) \, A \qquad\qquad (1)$$

where:

F is the permeated flow, mol s$^{-1}$

$\varphi$ is the permeation coefficient, mol s$^{-1}$ m$^{-2}$ Pa$^{-1}$

A is the surface of the membrane, m$^2$

$p_{up}$ and $p_{down}$ are respectively the partial pressure of the permeating gas species upstream and downstream of the membrane, expressed in Pa.

In particular, to establish the type of fluid dynamics regimen within the membrane, it is necessary to compare the average free path of the gas ($\lambda$) with the diameter of the membrane pores (2r). On the basis of this comparison, the fluid dynamics regimen is determined by considering two borderline cases:

■ A viscous regimen or Poiseuille's regimen, which occurs when the average free path of the gas molecules is much lower than the diameter of the membrane pores.
■ A molecular regimen or Knudsen's regimen, which occurs when the average free path of the gas molecules is greater than the pore diameter.

Permeability Pe, which is linked to the permeation coefficient $\varphi$ by the relation $\varphi = Pe/d$, where d is the membrane thickness, is obtained through the following relation in the case of Poiseuille's regimen:

$$Pe = \frac{\varepsilon \eta r^2}{8 \mu R T} \bar{p} \qquad\qquad (a)$$

while for Knudsen's regimen it is given by:

$$Pe = \frac{2 \varepsilon \eta r v}{3 R T} \qquad\qquad (b)$$

where:

Pe is the permeability, mol s$^{-1}$ m$^{-1}$ Pa$^{-1}$
$\varepsilon$ is the porosity of the membrane
$\eta$ is the shape factor
r is the radius of the pores, m
$\mu$ is the viscosity, Pa s
R is the gas constant equal to 8.31 J mol$^{-1}$ K$^{-1}$
T is the absolute temperature, K
$\bar{p}$ is the average pressure in the membrane, Pa

v is the **molecular velocity** $= \sqrt{\dfrac{8 R T}{\pi M}}$, m s$^{-1}$.

In practice, various situations can occur; for example, if the average free path of the gas molecules takes on values comparable with the membrane pore diameter, then we have a mixed regimen, and the permeation is expressed by a linear combination of the Poiseuille and Knudsen relations.

Although bearing in mind that the mass transfer process of a gas through a porous medium depends on the fluid-dynamic conditions (E. A. Mason & A. P. Malinauskas, Gas transport in porous media: the dusty-gas model, *Elsevier*, 1983; B. S. Massey, Mechanics of fluids, 6$^{th}$ Edition, Chapman& Hall, 1989), and that depending on the fluid dynamics regimen within the membrane its permeability value is theoretically calculable on the basis of various relations, in any case, assuming a limited pressure jump, the aforesaid relation (1) remains valid. This relation highlights a linear dependency of the permeated gas flow from the difference between its partial pressure upstream and downstream of the membrane. In the case of permeation tests carried out with pure gases, the term $p_{up}$ stands for the total pressure of the permeating gas.

As shown by the specific literature (S. Tosti, A. Adrover, A. Basile, V. Camilli, G. Chiappetta, V. Violante, Characterization of thin wall Pd-Ag rolled membranes, *Int. J. of Hydrogen Energy* **28** (2003), 105; S. Tosti, Supported and laminated Pd-based metallic membranes, *Int. J. Hydrogen Energy,* **28** (2003), 1445), in laboratory practice the characterisation of membranes is carried out with two operational methods known as the "dynamic" test and "quasi-static" permeation test.

In the "dynamic" tests, permeance $\varphi$ is determined on the basis of the aforesaid relation (1), by measuring in steady state conditions the pressures established upstream and downstream of the membrane and then checking, by means of a suitable regulating-measuring device, the flow rate of the permeating gas. In fact, formula (1) may be resolved with respect to permeance $\varphi$:

$$\varphi = \frac{F}{A\,(p_{up} - p_{down})} \tag{2}$$

For the sake of convenience, the above relation is resolved with respect to quantity "$\varphi$ A" (product of the permeance by the membrane surface), with unit of measurement mol $s^{-1}$ $Pa^{-1}$:

$$\varphi\,A = \frac{F}{(p_{up} - p_{down})} \tag{3}$$

In the "quasi-static" tests, in order to determine membrane permeance, the connected vessel is pressurised and then the drop in the internal pressure in the vessel is measured in an appropriate time interval. In fact, assuming uniform pressure and temperature inside the vessel volume, and constant temperature, for the system under examination the following equation may be written:

$$p_{up}\,V = nRT \tag{4}$$

where:

V is the internal volume of the vessel, $m^3$
n are the moles of gas within the volume, mol
R and T are as defined above.

In practice, considering the case where the vessel in question is, downstream of the membrane, exposed to environmental air, $p_{down}$ is constant and for convenience is expressed by the following relation:

$$p_{down} = \gamma\,p_{atm} \tag{5}$$

where:

$\gamma$ is the volumetric fraction in air of the gas used, which takes on the exemplificative values reported in Table 1 below, and
$p_{atm}$ is atmospheric pressure, Pa.

TABLE 1, values of coefficient $\gamma$

| Gas type | $\gamma$ |
|---|---|
| Air | 1 |
| Nitrogen | 0.78084 |
| Oxygen | 0.20946 |
| Argon | 0.00934 |
| Carbon dioxide | 0.00033 |

(continued)

| Gas type | $\gamma$ |
|---|---|
| Other gases | 0 |

Considering that the flow of gas permeating through the membrane may also be expressed by the following relation:

$$F = -\frac{d\,n}{d\,t} \qquad (6)$$

and deriving relation (4) with respect to time and then combining it with relations (1) and (6), the following is obtained:

$$\frac{d\,p_{up}}{p_{up} - \gamma\,p_{atm}} = -\frac{R\,T\,\varphi\,A}{V}\,d\,t \qquad (7)$$

Finally, integrating and resolving with respect to quantity "$\varphi$ A", the following is obtained:

$$\varphi\,A = \frac{V}{R\,T}\,\frac{\ln\dfrac{p_{up,1} - \gamma\,p_{atm}}{p_{up,2} - \gamma\,p_{atm}}}{t_2 - t_1} \qquad (8)$$

where:

$p_{up,1}$ and $p_{up,2}$ are respectively the pressure values of the permeating gas that are measured within the volume at time instances $t_1$ and $t_2$, while all the other parameters have already been defined.

According to a first aspect of the present invention, based on the hypothesis that the vessel whose internal volume to be measured is gastight, that is, has no discernible leakages, there is proposed to apply the two relations (3) and (8), which are normally used for the characterisation of a membrane undergoing experimental evaluation (permeation tests in the "dynamic" mode and in the "quasi-static" mode), it being mounted on a vessel of known volume and supplemented with suitable measurement and regulation devices, in order to determine the unknown volume of a vessel to which the membrane is connected. To this end, relation (8) may be developed to yield the sought volume, as follows:

$$V = R\,T\,(\varphi\,A)\,\frac{t_2 - t_1}{\ln\dfrac{p_{up,1} - \gamma\,p_{atm}}{p_{up,2} - \gamma\,p_{atm}}} \qquad (9)$$

In general, therefore, the unknown volume of a gastight vessel may be determined, according to the present invention, by carrying out two consecutive permeation tests: the first test is carried out in a "dynamic" mode and enables the calculation - by means of formula (3) - of the quantity "$\varphi$ A" that is characteristic of the membrane; on the other hand, the second test is carried out in a "quasi-static" mode and enables the determination of the unknown volume by means of the relation (9), having first inserted the value of "$\varphi$ A" obtained from the previous test.

The measurement procedure proposed according to the present invention may also start from a known permeance membrane, for which the quantity "$\varphi$ A" has already been determined, and may consist of only carrying out the "quasi-static" mode test, which, through relation (9), enables finding the volume, since all the other quantities involved are known or have been measured. The permeation test in "dynamic" mode can be carried out periodically in order to calibrate the measurement system or to measure the quantity "$\varphi$ A" of membranes produced for special applications. In fact, the relation (3) applied to a "dynamic" permeation test enables measuring the quantity "$\varphi$ A" that is characteristic of the membrane used in the actual operating conditions of pressure and temperature adopted experimentally.

Alternatively, still according to the present invention, quantity "φ A" may be determined (still in the case of periodic calibrations or characterisation of membranes produced for special applications) by using a known volume (which constitutes the primary standard) and conducting a test in a "quasi-static" mode in the actual operating conditions, with the same device used to determine the unknown volume according to relation (9). In this case, quantity "φ A" is obtained from formula (8).

As noted, the measurement procedure described so far is applicable - like the ones recalled above - only to the measurement of the internal volume of vessels that may be considered to be "gastight". In fact, for vessels where the measurement gas flow through the membrane is not the only (non-negligible) flow exiting the vessels, the considered measurement procedure does not yield an accurate result, even in cases where great care is taken for the utmost precision in measurement. From a practical standpoint, in the case of the method described so far, the only vessels which may be considered gastight are the ones in which, during purposely conducted tightness tests, negligible leakages are measured with respect to the permeation flows of the same gas through the test membrane used for measuring internal volume. In the other cases, the measurement procedure considered, although extremely simple and economical to carry out, does not yield measurements of great precision.

In view of the above, according to a further aspect of the present invention aimed at the determination of the internal volume of non-gastight vessels, it is suggested to conduct a preliminary measure of the tightness by using the same test gas that is used afterwards for measuring the unknown volume and by keeping closed the passage of the measurement device through the membrane, in order to determine the value of a corrective parameter linked to the leakages. This will then be introduced into the general relation for the determination of the volume by means of permeation tests carried out in a "quasi-static" mode, in order to account for leakages as if it were a matter of a corrective factor for membrane permeability.

Thus, the present invention specifically provides a process for the determination of the internal volume of gastight containers by means of permeation tests carried out in a "quasi-static" mode, consisting of the following phases:

■ connecting a vessel to be measured to a measurement device consisting of a membrane of permeance φ to a given measurement gas and exposed surface A, such that the product "φ A" be known, the said membrane being exposed on one side to the atmosphere inside the vessel to be measured and on the other to the environmental atmosphere, at pressure $p_{atm}$;
■ pressurising the said vessel up to an established pressure level, by introducing the measurement gas, or depressurising the said vessel up to an established pressure level, by extracting the air;
■ measuring the internal pressure of the vessel in time instances $t_1$ and $t_2$, measuring the time interval between $t_1$ and $t_2$, measuring the temperature T and atmospheric pressure $p_{atm}$; and
■ calculating the volume by means of the following formula:

$$V = R\,T\,(\varphi\,A)\ \frac{t_2 - t_1}{\ln \dfrac{p_{up,1} - \gamma\,p_{atm}}{p_{up,2} - \gamma\,p_{atm}}} \qquad\qquad (9)$$

where all the quantities are as defined above.

Environmental temperature, vessel temperature and measurement device temperature, as well as the atmospheric pressure, must be considered constant during the measurement interval within the tolerated margins of error.

For the purposes of the present description, the term "membrane" is in general taken to mean any porous baffle, orifice or diaphragm of which it is possible to reliably establish the permeability with respect to the measurement gas. It is evident that, depending on the size of volume to be measured, it will be more convenient - for accuracy and replicability of measurement - to adopt porous membranes or calibrated pores of different permeability, the larger for larger volumes, up to an extreme condition in which membrane functions may be effectively performed by a simple calibrated orifice.

Considering the case where the vessel to be measured may also be non-gastight, a further specific object of the present invention is a procedure for the determination of the internal volume of closed vessels by means of permeation tests carried out in a "quasi-static" mode, consisting of the following phases:

1a) tightness test:

■ connecting a vessel to be measured to a measurement device consisting of a membrane of permeance φ with a given measurement gas and exposed surface A, such that the product "φ A" be known, the said membrane being exposed on one side to the atmosphere inside the vessel to be measured and it being possible to isolate the said membrane from the vessel by means of closing an on-off valve, and being exposed on the other side to the environmental atmosphere, at pressure $p_{atm}$;

■ pressurising the said vessel - the said on-off valve of the membrane being closed - up to an established pressure level, by introducing the measurement gas, or depressurising the said vessel up to an established pressure level, by extracting the air;

■ measuring the internal pressure of the vessel in time instances $t_a$ and $t_b$, measuring the time interval between $t_a$ and $t_b$, measuring the temperature T and atmospheric pressure $p_{atm}$; and

■ calculating the time constant relative to the tightness measurement, $\tau$, by means of the following relation:

$$\tau = \frac{t_b - t_a}{\ln \dfrac{p_{up,a} - \gamma\, p_{atm}}{p_{up,b} - \gamma\, p_{atm}}} \qquad (10)$$

where:

$\gamma$ is the volumetric fraction in air of the measurement gas used,

$p_{up,a}$ and $p_{up,b}$ (expressed in Pa) are respectively the values of permeating gas pressure measured inside the volume at time instances $t_a$ and $t_b$ (expressed in s);

1b) permeation test in "quasi-static" mode:

■ pressurising the said vessel - the said on-off valve of the membrane being closed - up to an established pressure level, by introducing the measurement gas, or depressurising the said vessel up to an established pressure level, by extracting the air;

■ closing an on-off valve for connection to a measurement gas supply or to a gas extraction system and then opening the on-off valve of the membrane, measuring the internal pressure of the vessel in time instances $t_3$ and $t_4$, measuring the time interval between $t_3$ and $t_4$, measuring temperature T and atmospheric pressure $p_{atm}$; and

■ calculating the volume by means of the following formula:

$$V = \frac{(\varphi\, A)}{\dfrac{\ln \dfrac{p_{up,3} - \gamma\, p_{atm}}{p_{up,4} - \gamma\, p_{atm}}}{t_4 - t_3} - \dfrac{1}{\tau}}\, RT \qquad (11)$$

where:

R is the gas constant,

$p_{up,3}$ and $p_{up,4}$ (expressed in Pa) are respectively the values of the permeating gas pressure measured inside the volume at time instances $t_3$ and $t_4$ (expressed in s), and all the other quantities are as defined above.

In practice, in the method according to the present invention applicable to non-gastight vessels, the tightness measurement is carried out by first pressurising the vessel under examination with the measurement gas coming from a suitable source (for example, a gas tank) or by depressurising it by means of a pumping system. In this case, the measurement gas input or extraction valve is open while the on-off valve of the membrane remains closed. Once the pressure value $p_{up,a}$ - selected for the test - is reached, the first valve is closed and, due to the gas leakages characterising the vessel, the pressure inside the vessel decreases (or increases in the case of depressurisation). Assuming a limited jump in pressure, even the gas flow characterising the leakage will linearly depend on the difference between the partial test gas pressure inside and outside the vessel, and similar relations to the ones described above in the introduction of the present patent application will apply. In this hypothesis, the tightness measurement will - via relation (10) - enable the determination of the time constant of the process concerning leakages.

Subsequently, according to the method proposed, a permeation test of a "quasi-static" type is carried out, appropriately in the same pressure interval as the tightness test. Operationally, the circuit composed of the vessel under examination and of the measurement device is again pressurised (or depressurised) with the measurement gas: during this operation the connection valve to the measurement gas supply or to the gas extraction system is open while the on-off valve of the membrane is closed. Once the pressure value $p_{up,3}$ - selected for the test - is reached, the first valve is closed and the second one opened. Due to the leakages and permeation of the measurement gas through the membrane, the pressure will decrease (or increase) up to value $p_{up,4}$. At this point, the ascertained values can be introduced in the formula (11), which enables calculating the sought volume also bearing in mind the corrective term expressed by means of the time constant of the process relative to the tightness test.

As may be noted from the aforesaid relations (10) and (11), the time constant $\tau$ relative to the tightness measurement is greater the lower the variations in pressure inside the vessel due to leakages within a given time interval. Consistently, its inverse $1/\tau$, which enters as a corrective factor in formula (11), tends to become negligible as the pressure variations found in the tightness test gradually decrease, thus taking formula (11) back to the value previously expressed as formula (9).

In all the tests, the environmental temperature, vessel and measurement device temperature, as well as atmospheric pressure, must be considered constant during the measurement interval within the tolerated margins of error. In the case where the tightness measurement test and permeation test are carried out at different temperatures, the corrections will be performed by using the known physical laws.

In view of the fact that the measurement device, which according to the present invention must be connected to the vessel to be measured, has its own volume, in applying the aforesaid method, from the volume calculated by means of formula (9) or formula (11) must be subtracted the internal, known, volume of the said measurement device, according to the relation:

$$V_{mis} = V - V_f$$

where:

   $V_{mis}$ is the internal volume of the vessel,
   $V_f$ is the internal volume of the measurement device.

As already mentioned, according to some forms of specific realisation of the present invention, the vessel undergoes pressurisation in both the permeation test in "quasi-static" mode and in the possible tightness test, and the final pressure values $p_{up,2}$, $p_{up,b}$ and $p_{up,4}$ reached at the end of each time interval are higher than atmospheric pressure. According to another form of realisation, the said vessel undergoes depressurisation, in both the permeation test in "quasi-static" mode and in the possible tightness test, and the initial pressure values $p_{up,1}$, $p_{up,a}$ and $p_{up,3}$ are lower than the corresponding final pressure values $p_{up,2}$, $p_{up,b}$ and $p_{up,4}$ reached at the end of the time interval - all the said values being lower than atmospheric pressure.

In cases where the tightness measurement test is carried out, as well as the "quasi-static" permeation test, operating below atmospheric pressure, that is, depressurising the vessel, air is conveniently used as a test gas, for which $\gamma = 1$, and formulas (9), (10) and (11) are still valid. Formulas (9), (10) and (11) also take on a still more general character, that is, they may be applied even to vessels immersed in particular atmospheres other than air; in this case, quantity $\gamma\, p_{atm}$ in the formulas must be substituted by the partial pressure of the test gas outside the vessel, that must thus be measured.

The present invention also concerns a measurement device to carry out the first procedure described above, and namely the determination of the internal volume of gastight vessels by means of permeation tests conducted in a "quasi-static" mode. The measurement device is connected by means of a gastight flange to the said vessel and includes:

   ■ a membrane of permeance $\varphi$, with a given measurement gas and exposed surface A, such that the product "$\varphi$ A" is known; the membrane being mounted on the device such that it is exposed on one side to the atmosphere inside the vessel to be measured and on the other to the environmental atmosphere;
   ■ a valve connecting to a measurement gas supply or to a gas extraction system;
   ■ a pressure sensor mounted on the device and used for measuring the pressure inside the vessel.

In cases where the vessel to be measured is not gastight, then the present invention also concerns a measurement device for performing the aforesaid procedure, and namely the determination of the internal volume of closed vessels by means of permeation tests carried out in the "quasi-static" mode; the said device being connected by a gastight flange to the said vessel and including:

■ a membrane of permeance φ, with a given measurement gas and exposed surface A, such that the product "φ A" is known; the membrane being mounted on the device such that it is exposed on one side to the atmosphere inside the vessel to be measured and on the other to the environmental atmosphere;
■ a valve connecting to a measurement gas supply or to a gas extraction system;
■ a valve connecting with the said membrane;
■ a pressure sensor mounted on the device and used for measuring the pressure inside the said vessel.

In both cases, the device is equipped with a second pressure gauge and a thermometer, in order to measure pressure and environmental temperature, as well as a timer.

According to another aspect of the present invention, a method is proposed for the calibration of membranes by means of permeation tests carried out in the "dynamic mode", consisting of the following phases:

■ introducing a measurement gas, at an established gas flow F, into a measurement device consisting of a membrane of permeance φ, with a given measurement gas and exposed surface A, such that the product "φ A" is unknown; the said membrane being exposed on one side to the atmosphere inside the device and on the other to the environmental atmosphere;
■ measuring the pressure that is established in steady state conditions inside the device, $p_{up}$, measuring temperature T and atmospheric pressure $p_{atm}$; and
■ calculating the quantity "φ A" by means of the following formula:

$$\varphi\, A = \frac{F}{(p_{up} - p_{down})} \qquad (3)$$

where $p_{down} = \gamma\, p_{atm}$, and all the other magnitudes are as defined above.

The relative measurement device, which is also the object of the present invention, consists of:

■ a membrane of permeance φ, with a given measurement gas and exposed surface A, such that the product "φ A" is unknown; the membrane being mounted on the said device such that it is exposed on one side to the atmosphere inside the vessel to be measured and on the other to the environmental atmosphere;
■ a valve connecting to a measurement gas supply;
■ a device for measuring-regulating the amount of gas on the line of the said measurement gas supply;
■ a pressure gauge mounted on the device in order to measure the pressure inside the vessel.

Moreover, the device is preferably equipped with at least one other gauge in order to measure environmental pressure.

As already noted, according to a further aspect of the present invention, it is possible to determine the quantity "φ A" by means of permeation tests performed in "quasi-static" mode, and using a vessel of known internal volume and relation (9) is resolved with respect to the unknown "φ A" (relation 8). In this case, the proposed procedure consists of the following phases:

■ connecting a gastight vessel of known internal volume to a measurement device also of known internal volume, consisting of a membrane of permeance φ with a given measurement gas and exposed surface A, such that the product "φ A" is unknown, the said membrane being exposed on one side to the atmosphere inside the vessel and on the other to the environmental atmosphere, the sum of the internal volume of the vessel and of the measurement device being equal to V;
■ pressurising the said vessel up to an established pressure level, by introducing the measurement gas, or depressurising the said vessel up to an established pressure level, by extracting the air;
■ measuring the internal pressure of the vessel in time instances $t_1$ and $t_2$, measuring the time interval between $t_1$ and $t_2$, measuring the temperature T and atmospheric pressure $p_{atm}$; and
■ calculating quantity "φ A" by means of the aforesaid formula (8).

In order to implement the latter method, the same device proposed for measuring gastight vessel volumes by means of permeation tests in a "dynamic mode" can be used, with the sole difference that, in this case, the device is connected to a vessel of known internal volume.

The specific characteristics of the present invention, as well as its advantages and the relative operative modes, will be more evident with reference to the detailed description presented merely for exemplification purposes below, together with the results of the experiments carried out on it. Some exemplificative embodiments are also illustrated in the attached drawings, in which:

Figure 1 shows a simplified scheme of a measurement device by means of permeation tests carried out in a "dynamic mode" according to the present invention<,

Figure 2 shows a simplified scheme of a measurement device by means of permeation tests carried out in the "quasi-static" mode according to the present invention and applicable only to gastight vessels<,

Figure 3 shows a simplified scheme of a measurement device by means of permeation tests carried out in the "quasi-static" mode according to the present invention, and applicable to both gastight and non-gastight vessels; and

Figure 4 shows the calibration curves for the tests in the "quasi-static" mode on gastight vessels with three different membranes, M1, M2 and M3, with different permeations for the measurement gas according to their different sizes.

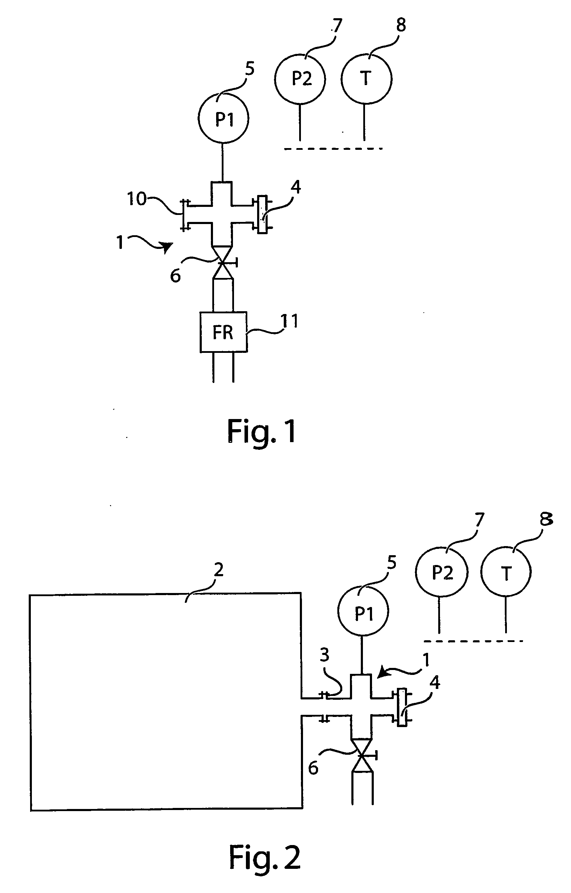

The device schematically illustrated in Figure 2 may be used according to the present invention by adopting a known permeation membrane in order to determine the internal volume of a gastight vessel by means of permeation tests in the "quasi-static" mode, possibly after having determined the permeability of the membrane with the method of the present invention that uses tests in the "dynamic mode". The measurement device (1) is connected to the vessel (2) under examination by means of a gastight flange (3), and includes the membrane (4) of known permeability, the pressure gauge (5) (P1) and an on-off valve (6) enabling the pressurisation procedure. The device is completed by a second pressure gauge (7) (P2) for measuring atmospheric pressure and a thermometer (8) (T) for measuring test temperature. Finally, a timer (not shown) is also necessary for carrying out the test. Operationally, the circuit composed of the vessel (2) under examination and the measurement device (1) is pressurised up to a pressure value $p_{up,1}$ and the time necessary for the pressure to reach value $p_{up,2}$ (which must be higher than atmospheric pressure in order to avoid air feedback within the vessel) is counted.

An alternative but equivalent method consists of depressurising the vessel (2) under examination: in this case, the value of $p_{up,1}$ is lower than the value of $p_{up,2}$ and both are lower than atmospheric pressure. In fact, as previously noted for this case, by operating in air we obtain the progressive increase in pressure up to the atmospheric value in the vessel. In both cases, using relation (9) yields the unknown volume.

Finally, in order to ascertain the volume (2) of the vessel under examination, it is necessary to subtract the known volume constituted by the measurement device (flange with pressure gauge P1, valve V and membrane) from the value V calculated by means of formula (9):

$$V_{mis} = V - V_f$$

where $V_{mis}$ is the volume of the vessel and $V_f$ is the volume of the flange with the measurement system.

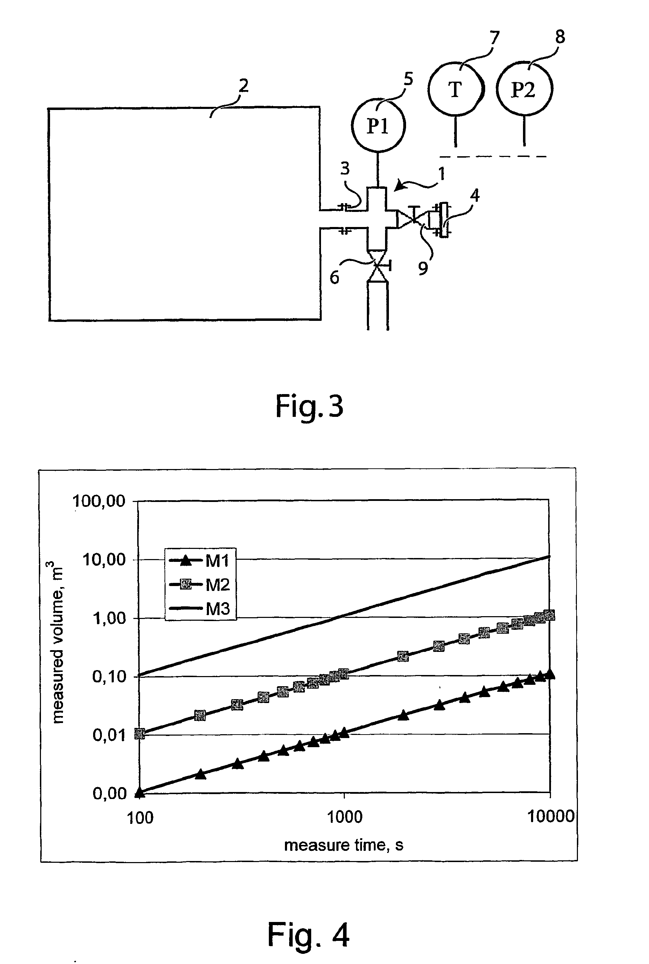

The device schematically illustrated in Figure 3 may instead be used according to the present invention (with a membrane of known permeability) in order to determine the internal volume of a non-gastight vessel by means of permeation tests in the "quasi-static" mode, after having carried out a tightness test with the same device, in order to determine the time constant relative to the leakages. Membrane permeability may be known or may be determined beforehand by carrying out a permeation test in the "dynamic" mode according to the procedure described above. This test may be repeated later for checks or calibrations.

In this case, too, the measurement device (1) is connected to the vessel (2) under examination by means of a gastight flange (3), and consists of the membrane (4) of known permeability, the pressure gauge (5) (P1) and an on-off valve (6) enabling the pressurisation (or depressurisation) operation. In this case the membrane (4) may be isolated from the rest of the device by closing the on-off valve (9). The device is completed with a second pressure gauge (7) (P2) for measuring atmospheric pressure and also a thermometer (8) (T) for measuring test temperature. Finally, a timer (not shown) is necessary for carrying out the test.

According to a first possibility, both in the tightness test and in the subsequent permeation test in the "quasi-static" mode, the circuit composed of the vessel (2) under examination and the measurement device (1) is pressurised up to a pressure value $p_{up,a}$ (or $p_{up,3}$), and the time necessary for the pressure to reach the value $p_{up,b}$ (or $p_{up,4}$) (which must be higher than atmospheric pressure in order to avoid air feedback into the vessel) is counted. An alternative but equivalent method consists of depressurising the vessel (2) under examination: in this case, the value of $p_{up,a}$ (or $p_{up,3}$) is lower than the value of $p_{up,b}$ (or $p_{up,4}$) and both are lower than atmospheric pressure. In fact, as previously noted for this case, by operating in air we obtain the progressive increase in pressure up to the atmospheric value in the vessel.

In both cases, using relation (10) yields the time constant $\tau$ relative to the tightness test and, by means of the subsequent permeation test, we obtain the unknown volume through formula (11).

Finally, in this case too, in order to evaluate vessel volume (2), from the value V calculated by means of formula (11) must be subtracted the known volume consisting of the measurement device (flange with pressure gauge P1, valve V and the membrane):

$$V_{mis} = V - V_f$$

where $V_{mis}$ is vessel volume and $V_f$ is the flange volume with the measurement system.

In both the above-described methods, the measurements must be carried out in such a way as to guarantee the necessary fluid-dynamic conditions for obtaining a uniform pressure within the volume to be measured. To this end, the pressure jumps (from $p_{up,1}$ to $p_{up,2}$, from $p_{up,a}$ to $p_{up,b}$ and from $p_{up,3}$ to $p_{up,4}$) must be moderate, while the measurement intervals (from $t_1$ to $t_2$ and from $t_3$ to $t_4$) must be sufficiently long, above all, in cases where the vessel under examination is characterised by a large length-section ratio (tubing, elongated tanks, etc.).

Moreover, it is important for the test gas not to give rise to significant chemical-physical interactions (that is, adsorption/desorption phenomena) with the materials making up the internal walls of the vessel and with those belonging to objects placed inside the vessel itself.

As an example, Figure 4 shows the calibration curves for the pressure jump from $p_{up,1}$ = 120 kPa to $p_{up,2}$ = 110 kPa for three different membranes (M1, M2, M3), having the following product "φ A" values for the measurement gas, and respectively: $3.77 \cdot 10^{-10}$ mol s$^{-1}$ Pa$^{-1}$, $3.77 \cdot 10^{-9}$ mol s$^{-1}$ Pa$^{-1}$ and $3.77 \cdot 10^{-8}$ mol s$^{-1}$ Pa$^{-1}$. The example reveals that volumes in the 0.01-0.10 m$^3$ interval can be measured with membrane M2 by using measurement times between 100 and 1000 s, or with membrane M1 by using measurement times between 1000 and 10000 s.

If it is desired to preventively measure the quantity "φ A" characteristic of the membrane used in the actual operating conditions of the experimentation by carrying out tests in the "dynamic mode", then we can use the device shown in Figure 1. This device and the relative procedure, as already noted, may be used for the periodical calibration of the measurement system, or for measuring the "φ A" parameter of membranes produced for special applications.

The device shown in Figure 1, for carrying out "dynamic" permeation tests, differs from the one of Figure 2 for the addition - on the measurement gas supply line - of a gas flow rate measuring-regulating device (11) (FR) or flow rate gauge and a blind flange (10). In the figure, the elements corresponding to those of Figure 2 are marked with the same reference numbers. Operationally, the flow rate gauge (11) (FR) is used for checking gas flow rate across the membrane and - in steady state conditions - the partial pressure values of the measurement gas ($p_{up}$ and $p_{down} = \gamma\, p_{atm}$) are measured via gauges P1 (5) and P2 (7). The gas flow rate and pressure values enable the calculation of the unknown value - by means of relation (3) - of the quantity "φ A" characteristic of the membrane under examination.

EXAMPLE 1

Gastight vessel

Merely for exemplification purposes, there are reported the results obtained by using the devices shown in Figures 1 and 2 with a membrane (4), consisting of a 30 mm diameter brass baffle with, at its centre, a calibrated pore 60 $\mu$m in diameter and 350 $\mu$m long. The overall dimensioning was carried out by considering Poiseuille's fluid dynamics regimen ($\lambda << 2r$) and by using the above-described formulas.

The permeation test carried out in the "dynamic" mode (device of Fig. 1) using air at a temperature of 31.4°C with a flow rate of 2.05 mol/s enabled calculating the value of "φ A" as $3.83\ 10^{-10}$ mol/Pa·s.

The experimental circuit used pressure gauges with a maximum value of 500 kPa and reading error of 1% (that is, about 1.6 kPa, bearing in mind the pressure values measured and described later) and a flow rate measuring-regulating device with a maximum value of 3.41 mol s$^{-1}$ and error of 1% of the maximum value (that is, 0.034 mol s$^{-1}$).

The measurement device was thus connected to a metal cylinder of a known volume of 2.870 litres (the volume determined via the gravimetric technique, by first filling the cylinder with water and then weighing it). Volume $V_f$ of the flange and of the measurement system was ascertained as 0.014 litres.

To measure the volume, a "quasi-static" test was carried out by using the device of Fig. 2. A pressure increase from 166.676 kPa to 155.554 kPa in 537 s was measured and formula (9) was used in order to calculate a volume V of 2.768 litres, from which must be subtracted the volume $V_f$ of 0.014 litres to obtain the value $V_{mis}$ of 2.754 litres. This value, if compared to the known value of 2.870 litres, shows an error of about 4% - an error that lies within the value that may be calculated bearing in mind the precision of the instrumentation used for measuring flow and pressure.

EXAMPLE 2

<u>Non-gastight vessel</u>

Merely for exemplification purposes, another measurement is reported below, carried out by using the device shown in Figure 3, for the internal volume of a non-perfectly gastight experimental chamber with a nominal volume of 1 $m^3$. The chamber is for use in applications of experimental physics and thus contains various instruments inside that significantly reduce the available volume to 0.919 $m^3$.

The tightness test was carried out by depressurising the chamber in the pressure interval between 82.2 and 84.7 kPa at a test temperature between 18.0 and 20.3 °C. Since the test membrane permeability is referred to a temperature of 20 °C, the pressure values measured were normalised (in this case, by using the law of perfect gases) to this temperature. In this way, the constant $1/\tau$ measured turned out to be 5.70 $10^{-7}$ $s^{-1}$.

The subsequent permeation test in a "quasi-static" mode was carried out by using a membrane composed of a brass baffle with, at its centre, a calibrated pore 148 $\mu$m in diameter and 815 $\mu$m in length, with a "$\varphi$ A" value of 6.208 $10^{-9}$ mol $s^{-1}$ $Pa^{-1}$ measured at 20 °C. The chamber was depressurised up to a value of 83.7 kPa and in 8.34 $10^4$ s the pressure rose to a value of 93.4 kPa, with atmospheric pressure being 97.0 kPa and permeation test temperature being between 18.5 and 19.7 °C. Here, too, after normalising the pressure values measured at 20 °C, the value of the first term of the denominator of formula (11)

$$\left( \ln \frac{p_{up,3} - \gamma\, p_{atm}}{p_{up,4} - \gamma\, p_{atm}} \right)/t_4 - t_3$$

was calculated as being equal to 1.707 $10^{-5}$ $s^{-1}$. This value, corrected with the $1/\tau$ value determined in the preceding test, yielded for the denominator of formula (11) the value of 1.65 $10^{-5}$ $s^{-1}$, which enabled the determination of the value of 0.919 $m^3$ for the free volume assessed.

The aforesaid examples show how the proposed method allows a very simple and considerably precise determination of the internal volume of even very complex shaped closed vessels, chambers or cavities - be they gastight or not. The equipment needed for implementing the method according to the present invention is extremely simple and may be made by using mainly commercially available components and at low cost, as well as being of practical use.

The present invention has been disclosed with particular reference to some specific embodiments thereof, but it should be understood that modifications and changes may be made by the persons skilled in the art without departing from the scope of the invention as defined in the appended claims.

**Claims**

1. A process for the determination of the internal volume of gastight containers by permeation tests carried out in a "quasi-static" mode, including the following phases:

   ■ connecting a vessel (2) to be measured to a measurement device (1) consisting of a membrane (4) of permeance $\varphi$, with a given measurement gas and exposed surface A, such that the product "$\varphi$ A" be known, the said membrane (4) being exposed on one side to the atmosphere inside the vessel (2) to be measured and on the other to the environmental atmosphere, at pressure $p_{atm}$;
   ■ pressurising the said vessel (2) up to an established pressure level, by introducing the measurement gas, or depressurising the said vessel (2) up to an established pressure level, by extracting the air;
   ■ measuring the internal pressure of the vessel (2) in time instances $t_1$ and $t_2$, measuring the time interval between $t_1$ and $t_2$, measuring the temperature T and atmospheric pressure $p_{atm}$; and
   ■ calculating the volume by means of the following formula:

$$V = R\, T\, (\varphi\, A)\ \frac{t_2 - t_1}{\ln \dfrac{p_{up,1} - \gamma\, p_{atm}}{p_{up,2} - \gamma\, p_{atm}}} \qquad (9)$$

   where:

R is the gas constant,

$\gamma$ is the volumetric fraction in air of the measurement gas used,

$p_{up,1}$ and $p_{up,2}$ are respectively the permeating gas pressure values measured inside the volume at time instances $t_1$ and $t_2$, and all the other quantities are as defined above.

2.  A process for the determination of the internal volume of gastight and non-gastight vessels by permeation tests carried out in a "quasi-static" mode, consisting of the following phases:

1a) tightness test:

■ connecting a vessel (2) to be measured to a measurement device (1) consisting of a membrane (4) of permeance $\varphi$ to a given measurement gas and exposed surface A, such that the product "$\varphi$ A" be known, the said membrane (4) being exposed on one side to the atmosphere inside the vessel (2) to be measured and it being possible to isolate the said membrane (4) from the vessel by means of closing an on-off valve (9), and being exposed on the other to the environmental atmosphere, at pressure $p_{atm}$;

■ pressurising the said vessel (2) - the said on-off valve (9) of the membrane (4) being closed - up to an established pressure level, by introducing the measurement gas, or depressurising the said vessel (2) up to an established pressure level, by extracting the air;

■ measuring the internal pressure of the vessel (2) in time instances $t_a$ and $t_b$, measuring the time interval between $t_a$ and $t_b$, measuring the temperature T and atmospheric pressure $p_{atm}$; and

■ calculating the time constant relative to the tightness measurement, $\tau$, by means of the following relation:

$$\tau = \frac{t_b - t_a}{\ln \dfrac{p_{up,a} - \gamma\, p_{atm}}{p_{up,b} - \gamma\, p_{atm}}} \tag{11}$$

where:

$\gamma$ is the volumetric fraction in air of the measurement gas used,

$p_{up,a}$ and $p_{up,b}$ are respectively the values of permeating gas pressure measured inside the volume at time instances $t_a$ and $t_b$;

1b) permeation test in "quasi-static" mode:

■ pressurising the said vessel (2) - the said on-off valve (9) of the membrane (4) being closed - up to an established pressure level, by introducing the measurement gas, or depressurising the said vessel (2) up to an established pressure level, by extracting the air;

■ closing an on-off valve (6) for connection to a measurement gas supply or to a gas extraction system and then opening the on-off valve (9) of the membrane (4), measuring the internal pressure of the vessel (2) in time instances $t_3$ and $t_4$, measuring the time interval between $t_3$ and $t_4$, measuring temperature T and atmospheric pressure $p_{atm}$; and

■ calculating the volume by means of the following formula:

$$V = \frac{(\varphi\, A)}{\dfrac{\ln \dfrac{p_{up,3} - \gamma\, p_{atm}}{p_{up,4} - \gamma\, p_{atm}}}{t_4 - t_3} - \dfrac{1}{\tau}}\, RT \tag{11}$$

where:

R is the gas constant,

$p_{up,3}$ and $p_{up,4}$ are respectively the values of the permeating gas pressure measured inside the volume at time instances $t_3$ and $t_4$, and all the other quantities are as defined above.

3. A process according to claims 1 or 2, wherein from the volume calculated by means of formula (9) or formula (B) is subtracted the internal, known, volume of the said measurement device, according to the relation:

$$V_{mis} = V - V_f$$

where:

$V_{mis}$ is the internal volume of the vessel (2),
$V_f$ is the internal volume of the measurement device (1).

4. A process according to claim 1, wherein the said vessel (2) undergoes pressurisation, and the final pressure value $p_{up,2}$ reached at the end of the time interval is higher than atmospheric pressure.

5. A process according to claim 1, wherein the said vessel (2) undergoes depressurisation, and the initial pressure value $p_{up,1}$ is lower than the final pressure value $p_{up,2}$ reached at the end of the time interval - both the said values being lower than atmospheric pressure.

6. A process according to claim 2, wherein the said vessel (2) - both in the tightness test and in the permeation test in the "quasi-static" mode - undergoes pressurisation, and the respective final pressure values $p_{up,b}$ and $p_{up,4}$ reached at the end of each time interval are higher than atmospheric pressure.

7. A process according to claim 2, wherein the said vessel (2) - both in the tightness test and in the permeation test in the "quasi-static" mode - undergoes depressurisation, and the respective initial pressure values $p_{up,a}$ and $p_{up,3}$ are lower than the corresponding final pressure values $p_{up,b}$ and $p_{up,4}$ reached at the end of the time interval - all the said values being lower than atmospheric pressure.

8. A device for the determination of the internal volume of gastight containers by means of permeation tests carried out in a "quasi-static" mode; the said device being connectable via a gastight flange (3) to the said vessel (2) and including:

■ a membrane (4) of permeance φ with a given measurement gas and exposed surface A such that the product "φ A" be known; the said membrane (4) being mounted on the said device (1) such that it is exposed on one side to the atmosphere inside the vessel (2) to be measured, and exposed on the other side to environmental pressure;
■ a valve (6) for connection to a measurement gas supply or to a gas extraction system;
■ a pressure gauge (5) mounted on the said device (1) and used for measuring the internal pressure of the said vessel (2).

9. A device for the determination of the internal volume of non-gastight vessels by means of permeation tests carried out in a "quasi-static" mode; the said device being connectable via a gastight flange (3) to the said vessel (2) and including:

■ a membrane (4) of permeance φ with a given measurement gas and exposed surface A such that the product "φ A" be known; the said membrane (4) being mounted on the said device (1) such that it is exposed on one side to the atmosphere inside the vessel (2) to be measured, and exposed on the other side to environmental pressure;
■ a valve (6) for connection to a measurement gas supply or to a gas extraction system;
■ a valve (9) for connection to the said membrane;
■ a pressure gauge (5) mounted on the said device (1) and used for measuring the internal pressure of the said vessel (2).

10. A device according to claims 8 or 9, equipped with a second pressure gauge (7) and a thermometer (8), for measuring environmental pressure and temperature, as well as a timer.

11. A process for the calibration of membranes by means of permeation tests carried out in a "dynamic" mode, consisting of the following phases:

■ using a measurement gas at an established flow rate F to feed a measurement device (1) consisting of a membrane (4) of permeance φ, with a given measurement gas and exposed surface A such that the product "φ A" be unknown; the said membrane (4) being exposed on the one side to the atmosphere inside the device (1) and on the other to the environmental atmosphere;

■ measuring the pressure established in steady state conditions inside the device (1), $p_{up}$, and measuring the temperature T and the atmospheric pressure $p_{atm}$; and

■ calculating the quantity "φ A" by means of the following formula:

$$\varphi \, A = \frac{F}{(p_{up} - p_{down})} \tag{3}$$

where:

$$p_{down} = \gamma \, p_{atm,}$$

γ is the volumetric fraction in air of the measurement gas used, while all the other quantities are as defined above.

**12.** A device for the calibration of membranes by means of permeation tests carried out in a "dynamic" mode consisting of:

■ a membrane (4) of permeance φ with a given measurement gas and exposed surface A such that the product "φ A" be unknown; the said membrane (4) being mounted on the said device (1) such that it is exposed on one side to the atmosphere inside it and exposed on the other side to environmental pressure;

■ a valve (6) for connection to a measurement gas supply;

■ a gas flow rate gauge (11) on the measurement gas supply line;

■ a pressure gauge (5) mounted on the said device (1) and used for measuring the internal pressure.

**13.** A device according to claim 12, equipped with a second pressure gauge (7) for measuring environmental pressure.

**14.** A process for the calibration of membranes by means of permeation tests carried out in a "quasi-static" mode, consisting of the following phases:

■ connecting a gastight vessel (2), of known internal volume, to a measurement device (1), also of known internal volume, consisting of a membrane (4) of permeance φ with a given measurement gas and exposed surface A, such that the product "φ A" be unknown, the said membrane (4) being exposed on the one side to the atmosphere inside the said vessel (2) and on the other to the environmental atmosphere - the sum of the internal volume of the vessel (2) and that of the said device (1) being equal to V;

■ pressurising the said vessel (2) up to an established pressure level, by introducing the measurement gas, or depressurising the said vessel (2) up to an established pressure level, by extracting the air;

■ measuring the internal pressure of the vessel (2) in time instances $t_1$ and $t_2$, measuring the time interval between $t_1$ and $t_2$, measuring the temperature T and atmospheric pressure $p_{atm}$; and

■ calculating the quantity "φ A" by means of the following formula:

$$\varphi \, A = \frac{V}{R \, T} \frac{\ln \frac{p_{up,1} - \gamma \, p_{atm}}{p_{up,2} - \gamma \, p_{atm}}}{t_2 - t_1} \tag{8}$$

where:

$p_{up,1}$ and $p_{up,2}$ are respectively the permeating gas pressure values measured within volume V at time instances $t_1$ and $t_2$, and all the other quantities are as defined above.

**15.** A device for the calibration of membranes by means of permeation tests in the "quasi-static" mode; the said device being connectable via a gastight flange (3) to a gastight vessel (2) of known internal volume and consisting of:

■ a membrane (4) of permeance φ with a given measurement gas and exposed surface A such that the product "φ A" be unknown; the said membrane (4) being mounted on the said device (1) such that it is exposed on one side to the atmosphere inside the vessel (2) and exposed on the other side to environmental pressure;
■ a valve (6) for connection to a measurement gas supply or to a gas extraction system; and
■ a pressure gauge (5) mounted on the said device (1) and used for measuring the internal pressure of the said vessel (2).

16. A device according to claim 15, equipped with a second pressure gauge (7) and a thermometer (8), for measuring the environmental pressure and temperature, as well as a timer.

**Patentansprüche**

1. Verfahren zur Bestimmung des Innenvolumens gasdichter Behälter durch Permeationstests, die in einem "quasi-statischen" Modus durchgeführt werden, welches die folgenden Phasen einschließt:

- Verbinden eines zu messenden Behälters (2) mit einer Messvorrichtung (1), bestehend aus einer Membran (4) mit der Durchlässigkeit φ für ein gegebenes Messgas und einer exponierten Oberfläche A, sodass das Produkt "φA" bekannt ist, wobei die Membran (4) auf einer Seite gegenüber der Atmosphäre innerhalb des zu messenden Behälters (2) exponiert ist und auf der anderen Seite gegenüber der umgebenden Atmosphäre, mit einem Druck $p_{atm}$;
- Druckbeaufschlagung des Behälters (2) bis zu einem festgelegten Druckniveau durch Einführung des Messgases oder Druckentlastung des Behälters (2) bis zu einem festgelegten Druckniveau durch Entzug der Luft;
- Messen des Innendrucks des Behälters (2) zu den Zeitpunkten $t_1$ und $t_2$, Messen des Zeitintervalls zwischen $t_1$ und $t_2$, Messen der Temperatur T und des Atmosphärendrucks $p_{atm}$; und
- Berechnen des Volumens mit Hilfe der folgenden Formel

$$V = R\,T\,(\varphi\,A)\ \frac{t_2 - t_1}{\ln \dfrac{p_{up,1} - \gamma\,p_{atm}}{p_{up,2} - \gamma\,p_{atm}}} \tag{9}$$

worin:

R die Gaskonstante ist,
γ der Volumenanteil in Luft des verwendeten Messgases ist, $p_{up,1}$ und $p_{up,2}$ jeweils die Druckwerte des permeierenden Gases sind, die innerhalb des Volumens zu den Zeitpunkten $t_1$ und $t_2$ gemessen werden, und alle anderen Größen wie oben definiert sind.

2. Verfahren zur Bestimmung des Innenvolumens von gasdichten und nicht gasdichten Behältern durch Permeationstests, die in einem "quasi-statischen" Modus durchgeführt werden, bestehend aus den folgenden Phasen:

1a) Dichtigkeitstest:

- Verbinden eines zu messenden Behälters (2) mit einer Messvorrichtung (1), bestehend aus einer Membran (4) mit einer Durchlässigkeit φ für ein gegebenes Messgas und einer exponierten Oberfläche A, so dass das Produkt "φA" bekannt ist, wobei die Membran (4) auf einer Seite gegenüber der Atmosphäre innerhalb des zu messenden Behälters (2) exponiert ist und es möglich ist, die Membran (4) von dem Behälter mittels des Schließens eines Ein-Aus-Ventils (9) zu isolieren, und auf der anderen Seite gegenüber der umgebenden Atmosphäre, mit einem Druck $p_{atm}$, exponiert ist;
- Druckbeaufschlagung des Behälters (2) - wobei das Ein-Aus-Ventil (9) der Membran (4) geschlossen ist - bis zu einem festgelegten Druckniveau durch Einführung des Messgases oder Druckentlastung des Behälters (2) bis zu einem festgelegten Druckniveau durch Entzug der Luft;
- Messen des Innendrucks des Behälters (2) zu den Zeitpunkten $t_a$ und $t_b$, Messen des Zeitintervalls zwischen $t_a$ und $t_b$, Messen der Temperatur T und des Atmosphärendrucks $p_{atm}$; und

- Berechnen der Zeitkonstante τ, bezogen auf die Dichtigkeitsmessung, mit Hilfe der folgenden Gleichung

$$\tau = \frac{t_b - t_a}{\ln \dfrac{p_{up,a} - \gamma\, p_{atm}}{p_{up,b} - \gamma\, p_{atm}}} \qquad (11)$$

worin:

γ der Volumenanteil in Luft des verwendeten Messgases ist, $p_{up,a}$ und $p_{up,b}$ jeweils die innerhalb des Volumens zu den Zeitpunkten $t_a$ und $t_b$ gemessenen Druckwerte des permeierenden Gases sind;

1b) Permeationstest im "quasi-statischen" Modus:

- Druckbeaufschlagung des Behälters (2) - wobei das Ein-Aus-Ventil (9) der Membran (4) geschlossen ist - bis zu einem festgelegten Druckniveau durch Einführung des Messgases oder Druckentlastung des Behälters (2) bis zu einem festgelegten Druckniveau durch Entzug der Luft;
- Schließen eines Ein-Aus-Ventils (6) zur Verbindung mit einer Messgasversorgung oder einem Gasentzugssystem und anschließendes Öffnen des Ein-Aus-Ventils (9) der Membran (4), Messen des Innendrucks des Behälters (2) zu den Zeitpunkten $t_3$ und $t_4$, Messen des Zeitintervalls zwischen $t_3$ und $t_4$, Messen der Temperatur T und des Atmosphärendrucks $p_{atm}$; und
- Berechnen des Volumens mit Hilfe der folgenden Formel

$$V = \frac{(\varphi\, A)}{\dfrac{\ln \dfrac{p_{up,3} - \gamma\, p_{atm}}{p_{up,4} - \gamma\, p_{atm}}}{t_4 - t_3} - \dfrac{1}{\tau}}\, RT \qquad (11)$$

worin:

R die Gaskonstante ist,
$p_{up,3}$ und $p_{up,4}$ jeweils die innerhalb des Volumens zu den Zeitpunkten $t_3$ und $t_4$ gemessenen Druckwerte des permeierenden Gases sind, und alle anderen Größen wie oben definiert sind.

3. Verfahren nach Anspruch 1 oder 2, wobei von dem Volumen, welches mit Hilfe der Formel (9) oder der Formel (11) berechnet wurde, das bekannte Innenvolumen der Messvorrichtung subtrahiert wird, gemäß der Beziehung:

$$V_{mis} = V - V_f$$

worin:

$V_{mis}$ das Innenvolumen des Behälters (2) ist,
$V_f$ das Innenvolumen der Messvorrichtung (1) ist.

4. Verfahren nach Anspruch 1, wobei der Behälter (2) eine Druckbeaufschlagung erfährt und der Enddruckwert $p_{up,2}$, der am Ende des Zeitintervalls erreicht wird, höher als der Atmosphärendruck ist.

5. Verfahren nach Anspruch 1, wobei der Behälter (2) eine Druckentlastung erfährt und der Anfangsdruckwert $p_{up,1}$ niedriger als der Enddruckwert $p_{up,2}$ ist, der am Ende des Zeitintervalls erreicht wird, wobei beide Werte niedriger als der Atmosphärendruck sind.

6. Verfahren nach Anspruch 2, wobei der Behälter (2) - sowohl im Dichtigkeitstest als auch im Permeationstest im "quasi-statischen" Modus - eine Druckbeaufschlagung erfährt und die jeweiligen Enddruckwerte $p_{up,b}$ und $p_{up,4}$, die am Ende eines jeden Zeitintervalls erreicht werden, höher als der Atmosphärendruck sind.

7. Verfahren nach Anspruch 2, wobei der Behälter (2) - sowohl im Dichtigkeitstest als auch im Permeationstest im "quasi-statischen" Modus - eine Druckentlastung erfährt und die jeweiligen Anfangsdruckwerte $p_{up,a}$ und $p_{up,3}$ niedriger sind als die entsprechenden Enddruckwerte $p_{up,b}$ und $p_{up,4}$, die am Ende des Zeitintervalls erreicht werden, wobei alle Werte niedriger als der Atmosphärendruck sind.

8. Vorrichtung zur Bestimmung des Innenvolumens von gasdichten Behältern mit Hilfe von Permeationstests, die in einem "quasi-statischen" Modus durchgeführt werden, wobei die Vorrichtung mittels eines gasdichten Flansches (3) mit dem Behälter (2) verbunden werden kann und einschließt:

- eine Membran (4) mit der Durchlässigkeit φ für ein gegebenes Messgas und einer exponierten Oberfläche A, sodass das Produkt "φA" bekannt ist; wobei die Membran (4) an der Vorrichtung (1) so angebracht ist, dass sie auf einer Seite gegenüber der Atmosphäre innerhalb des zu messenden Behälters (2) exponiert ist und auf der anderen Seite gegenüber dem Umgebungsdruck exponiert ist;
- ein Ventil (6) zur Verbindung mit einer Messgasversorgung oder mit einem Gasentzugssystem;
- einen Druckmesser (5), der an der Vorrichtung (1) angebracht ist und zur Messung des Innendrucks des Behälters (2) verwendet wird.

9. Vorrichtung zur Bestimmung des Innenvolumens von nicht-gasdichten Behältern mit Hilfe von Permeationstests, die in einem "quasi-statischen" Modus durchgeführt werden, wobei die Vorrichtung über einen gasdichten Flansch (3) mit dem Behälter (2) verbunden werden kann und einschließt:

- eine Membran (4) mit einer Durchlässigkeit φ für ein gegebenes Messgas und einer exponierten Oberfläche A, sodass das Produkt "φA" bekannt ist; wobei die Membran (4) an der Vorrichtung (1) so angebracht ist, dass sie auf einer Seite gegenüber der Atmosphäre innerhalb des zu messenden Behälters (2) exponiert ist und auf der anderen Seite gegenüber dem Umgebungsdruck exponiert ist;
- ein Ventil (6) zur Verbindung mit einer Messgasversorgung oder einem Gasentzugssystem,
- ein Ventil (9) zur Verbindung mit der Membran,
- einen Druckmesser (5), der an der Vorrichtung (1) angebracht ist und zur Messung des Innendrucks des Behälters (2) verwendet wird.

10. Vorrichtung nach den Ansprüchen 8 und 9, die mit einem zweiten Druckmesser (7) und einem Thermometer (8) zum Messen des Umgebungsdrucks und der Temperatur sowie mit einem Timer ausgerüstet ist.

11. Verfahren zur Kalibrierung von Membranen mit Hilfe von Permeationstests, die in einem "dynamischen" Modus durchgeführt werden, bestehend aus den folgenden Phasen:

- Verwendung eines Messgases mit einer festgelegten Flussrate F, um eine Messvorrichtung (1), bestehend aus einer Membran (4) mit der Durchlässigkeit φ für ein gegebenes Messgas und einer exponierten Oberfläche A, sodass das Produkt "φA" unbekannt ist, wobei die Membran (4) auf einer Seite gegenüber der Atmosphäre innerhalb der Vorrichtung (1) und auf der anderen Seite gegenüber der Umgebungsatmosphäre exponiert ist, zu beschicken;
- Messen des unter Gleichgewichtsbedingungen innerhalb der Vorrichtung (1) etablierten Drucks $p_{up}$, und Messen der Temperatur T und des Atmosphärendrucks $p_{atm}$; und
- Berechnen der Größe "φA" mit Hilfe der folgenden Formel

$$\varphi A = \frac{F}{(p_{up} - p_{down})} \qquad (3)$$

worin:

$$p_{down} = \gamma \, p_{atm},$$

γ der Volumenanteil in Luft des verwendeten Messgases ist, während alle anderen Größen wie oben definiert sind.

**12.** Vorrichtung zur Kalibrierung von Membranen mit Hilfe von Permeationstests, die in einem "dynamischen" Modus durchgeführt werden, bestehend aus:

- einer Membran (4) mit einer Durchlässigkeit φ für ein gegebenes Messgas und einer exponierten Oberfläche A, sodass das Produkt "φA" unbekannt ist; wobei die Membran (4) an der Vorrichtung (1) so angebracht ist, dass sie auf einer Seite gegenüber der Atmosphäre im Innern exponiert ist und auf der anderen Seite gegenüber dem Umgebungsdruck exponiert ist;
- einem Ventil (6) zur Verbindung mit einer Messgasversorgung;
- einem Gasflussratenmesser (11) an der Messgasversorgungsleitung;
- einem Druckmesser (5), der an der Vorrichtung (1) angebracht ist und zur Messung des Innendrucks verwendet wird.

**13.** Vorrichtung nach Anspruch 12, die mit einem zweiten Druckmesser (7) zur Messung des Umgebungsdrucks ausgerüstet ist.

**14.** Verfahren zur Kalibrierung von Membranen mit Hilfe von Permeationstests, die in einem "quasi-statischen" Modus durchgeführt werden, bestehend aus den folgenden Phasen:

- Verbinden eines gasdichten Behälters (2) eines bekannten Innenvolumens mit einer Messvorrichtung (1), ebenfalls mit einem bekannten Innenvolumen, bestehend aus einer Membran (4) mit einer Durchlässigkeit φ für ein gegebenes Messgas und einer exponierten Oberfläche A, sodass das Produkt "φA" unbekannt ist, wobei die Membran (4) auf einer Seite gegenüber der Atmosphäre innerhalb des Behälters (2) exponiert ist und auf der anderen Seite gegenüber der Umgebungsatmosphäre - wobei die Summe des Innenvolumens des Behälters (2) und desjenigen der Vorrichtung (1) gleich V ist;
- Druckbeaufschlagung des Behälters (2) bis zu einem festgelegten Druckniveau durch Einführung des Messgases oder Druckentlastung des Behälters (2) bis zu einem festgelegten Druckniveau durch Entzug der Luft;
- Messen des Innendrucks des Behälters (2) zu den Zeitpunkten $t_1$ und $t_2$, Messen des Zeitintervalls zwischen $t_1$ und $t_2$, Messen der Temperatur T und des Atmosphärendrucks $p_{atm}$; und
- Berechnen der Größe "φA" mit Hilfe der folgenden Formel

$$\varphi A = \frac{V}{R\,T}\,\frac{\ln\dfrac{p_{up,1} - \gamma\,p_{atm}}{p_{up,2} - \gamma\,p_{atm}}}{t_2 - t_1} \qquad (8)$$

worin:

$p_{up,1}$ und $p_{up,2}$ jeweils die Druckwerte des permeierenden Gases sind, die innerhalb des Volumens V zu den Zeitpunkten $t_1$ und $t_2$ gemessen werden, und alle anderen Größen wie oben definiert sind.

**15.** Vorrichtung zur Kalibrierung von Membranen mit Hilfe von Permeationstests im "quasi-statischen" Modus, wobei die Vorrichtung über einen gasdichten Flansch (3) mit einem gasdichten Behälter (2) eines bekannten Innenvolumens verbunden werden kann und besteht aus:

- einer Membran (4) mit einer Durchlässigkeit φ für ein gegebenes Messgas und einer exponierten Oberfläche A, sodass das Produkt "φA" unbekannt ist; wobei die Membran (4) an der Vorrichtung (1) so angebracht ist, dass sie auf einer Seite gegenüber der Atmosphäre innerhalb des Behälters (2) exponiert ist und auf der anderen Seite gegenüber dem Umgebungsdruck exponiert ist;
- einem Ventil (6) zur Verbindung mit einer Messgasversorgung oder einem Gasentzugssystem; und
- einem Druckmesser (5), der an der Vorrichtung (1) angebracht ist und zur Messung des Innendrucks des Behälters (2) verwendet wird.

**16.** Vorrichtung nach Anspruch 15, die mit einem zweiten Druckmesser (7) und einem Thermometer (8) zur Messung des Umgebungsdrucks und der Temperatur sowie mit einem Timer ausgerüstet ist.

## Revendications

1. Procédé pour la détermination du volume interne de récipients étanches vis-à-vis des gaz par des tests de perméation effectués dans un mode "quasi-statique", comprenant les phases suivantes :

   • la liaison d'un récipient (2) devant être mesuré à un dispositif de mesure (1) constitué par une membrane (4) de perméance φ, avec un gaz de mesure donné et une surface exposée A, de telle sorte que le produit "φA" soit connu, ladite membrane (4) étant exposée sur un côté à l'atmosphère à l'intérieur du récipient (2) devant être mesuré, et, sur l'autre, à l'atmosphère de l'environnement, à une pression $p_{atm}$ ;
   • la mise sous pression dudit récipient (2) jusqu'à un niveau de pression établi, par introduction du gaz de mesure, ou la dépressurisation dudit récipient (2) jusqu'à un niveau de pression établi, par extraction de l'air ;
   • la mesure de la pression interne du récipient (2) à des points dans le temps $t_1$ et $t_2$, la mesure de l'intervalle de temps entre $t_1$ et $t_2$, la mesure de la température T et de la pression atmosphérique $p_{atm}$ ; et
   • le calcul du volume à l'aide de la formule suivante :

$$V = RT(\varphi A) \frac{t_2 - t_1}{\ln \dfrac{p_{up,1} - \gamma\, p_{atm}}{p_{up,2} - \gamma\, p_{atm}}} \qquad (9)$$

   où :

   R est la constante des gaz,
   γ est la fraction volumétrique dans l'air du gaz de mesure utilisé,
   $p_{up,1}$ et $p_{up,2}$ sont, respectivement, les valeurs de pression de gaz perméant mesurées à l'intérieur du volume à des points dans le temps $t_1$ et $t_2$, et toutes les autres quantités sont comme défini ci-dessus.

2. Procédé pour la détermination du volume interne de récipients étanches vis-à-vis des gaz et non étanches vis-à-vis des gaz par des tests de perméation effectués dans un mode "quasi-statique", comprenant les phases suivantes :

   1a) test d'étanchéité :

   • liaison d'un récipient (2) devant être mesuré à un dispositif de mesure (1) constitué par une membrane (4) de perméance φ pour un gaz de mesure donné et une surface exposée A, de telle sorte que le produit "φA" soit connu, ladite membrane (4) étant exposée sur un côté à l'atmosphère à l'intérieur du récipient (2) devant être mesuré, et de telle sorte qu'il soit possible d'isoler ladite membrane (4) vis-à-vis du récipient à l'aide de la fermeture d'une vanne d'ouverture/fermeture (9), et étant exposée, sur l'autre, à l'atmosphère de l'environnement, à une pression $p_{atm}$ ;
   • mise sous pression dudit récipient (2) - ladite vanne d'ouverture/fermeture (9) de la membrane (4) étant fermée - jusqu'à un niveau de pression établi, par introduction du gaz de mesure, ou dépressurisation dudit récipient (2) jusqu'à un niveau de pression établi, par extraction de l'air ;
   • mesure de la pression interne du récipient (2) à des points dans le temps $t_a$ et $t_b$, mesure de l'intervalle de temps entre $t_a$ et $t_b$, mesure de la température T et de la pression atmosphérique $p_{atm}$ ; et
   • calcul de la constante de temps associée à la mesure d'étanchéité, τ, à l'aide de la relation suivante :

$$\tau = \frac{t_b - t_a}{\ln \dfrac{p_{up,a} - \gamma\, p_{atm}}{p_{up,b} - \gamma\, p_{atm}}} \qquad (11)$$

   où :

   γ est la fraction volumétrique dans l'air du gaz de mesure utilisé,
   $p_{up,a}$ et $p_{up,b}$ sont, respectivement, les valeurs de pression de gaz perméant mesurées à l'intérieur du volume à des points dans le temps $t_a$ et $t_b$ ;

1 b) test de perméation dans un mode "quasi-statique" :

• mise sous pression dudit récipient (2) - ladite vanne d'ouverture/fermeture (9) de la membrane (4) étant fermée - jusqu'à un niveau de pression établi, par introduction du gaz de mesure, ou dépressurisation dudit récipient (2) jusqu'à un niveau de pression établi, par extraction de l'air ;
• fermeture d'une vanne d'ouverture/fermeture (6) pour la liaison à une alimentation en gaz de mesure ou à un système d'extraction de gaz, puis ouverture de la vanne d'ouverture/fermeture (9) de la membrane (4), mesure de la pression interne du récipient (2) à des points dans le temps $t_3$ et $t_4$, mesure de l'intervalle de temps entre $t_3$ et $t_4$, mesure de la température T et de la pression atmosphérique $p_{atm}$ ; et
• calcul du volume à l'aide de la formule suivante :

$$V = \frac{(\varphi A)}{\ln \dfrac{p_{up,3} - \gamma\, p_{atm}}{p_{up,4} - \gamma\, p_{atm}}} RT \qquad (11)$$

où :

R est la constante des gaz,
$p_{up,3}$ et $p_{up,4}$ sont, respectivement, les valeurs de la pression de gaz perméant mesurée à l'intérieur du volume à des points dans le temps $t_3$ et $t_4$, et toutes les autres quantités sont comme défini ci-dessus.

3. Procédé selon les revendications 1 ou 2, dans lequel, du volume calculé à l'aide de la formule (9) ou de la formule (B), est soustrait le volume interne, connu, dudit dispositif de mesure, selon la relation :

$$V_{mis} = V - V_f$$

où :

$V_{mis}$ est le volume interne du récipient (2),
$V_f$ est le volume interne du dispositif de mesure (1).

4. Procédé selon la revendication 1, dans lequel ledit récipient (2) subit une mise sous pression, et la valeur de pression finale $p_{up,2}$ atteinte à la fin de l'intervalle de temps est supérieure à la pression atmosphérique.

5. Procédé selon la revendication 1, dans lequel ledit récipient (2) subit une dépressurisation, et la valeur de pression initiale $p_{up,1}$ est inférieure à la valeur de pression finale $p_{up,2}$ atteinte à la fin de l'intervalle de temps - lesdites valeurs étant toutes deux inférieures à la pression atmosphérique.

6. Procédé selon la revendication 2, dans lequel ledit récipient (2) - tout à la fois dans le test d'étanchéité et dans le test de perméation dans le mode "quasi-statique" - subit une mise sous pression, et les valeurs de pression finale respectives $p_{up,b}$ et $p_{up,4}$ atteintes à la fin de chaque intervalle de temps sont supérieures à la pression atmosphérique.

7. Procédé selon la revendication 2, dans lequel ledit récipient (2) - tout à la fois dans le test d'étanchéité et dans le test de perméation dans le mode "quasi-statique" - subit une dépressurisation, et les valeurs de pression initiale respectives $p_{up,a}$ et $p_{up,3}$ sont inférieures aux valeurs de pression finale correspondantes $p_{up,b}$ et $p_{up,4}$ atteintes à la fin de l'intervalle de temps - toutes lesdites valeurs étant inférieures à la pression atmosphérique.

8. Dispositif pour la détermination du volume interne de récipients étanches vis-à-vis des gaz à l'aide de tests de perméation effectués dans un mode "quasi-statique" ; ledit dispositif pouvant être relié par l'intermédiaire d'une bride étanche vis-à-vis des gaz (3) audit récipient (2), et comprenant :

• une membrane (4) de perméance $\varphi$ avec un gaz de mesure donné et une surface exposée A, de telle sorte

que le produit "φA" soit connu ; ladite membrane (4) étant montée sur ledit dispositif (1) de telle sorte qu'elle soit exposée sur un côté à l'atmosphère à l'intérieur du récipient (2) devant être mesuré, et exposée sur l'autre côté à pression de l'environnement :

- une vanne (6) pour la liaison à une alimentation en gaz de mesure ou à un système d'extraction de gaz ;
- un manomètre (5) monté sur ledit dispositif (1) et utilisé pour mesurer la pression interne dudit récipient (2).

9. Dispositif pour la détermination du volume interne de récipients non étanches vis-à-vis des gaz à l'aide de tests de perméation effectués dans un mode "quasi-statique" ; ledit dispositif pouvant être relié par l'intermédiaire d'une bride étanche vis-à-vis des gaz (3) audit récipient (2), et comprenant :

- une membrane (4) de perméance φ avec un gaz de mesure donné et une surface exposée A, de telle sorte que le produit "φA" soit connu ; ladite membrane (4) étant montée sur le dispositif (1) de telle sorte qu'elle soit exposée sur un côté à l'atmosphère à l'intérieur du récipient (2) devant être mesuré, et exposée sur l'autre côté à la pression de l'environnement ;
- une vanne (6) pour la liaison à une alimentation en gaz de mesure ou à un système d'extraction de gaz ;
- une vanne (9) pour la liaison à ladite membrane ;
- un manomètre (5) monté sur ledit dispositif (1) et utilisé pour mesurer la pression interne dudit récipient (2).

10. Dispositif selon les revendications 8 ou 9, équipé d'un deuxième manomètre (7) et d'un thermomètre (8), pour mesurer la pression et la température de l'environnement, ainsi que d'un minuteur.

11. Procédé pour l'étalonnage de membranes à l'aide de tests de perméation effectués dans un mode "dynamique", comprenant les phases suivantes :

- l'utilisation d'un gaz de mesure à un débit d'écoulement établi F pour alimenter un dispositif de mesure (1) constitué par une membrane (4) de perméance φ, avec un gaz de mesure donné et une surface exposée A, de telle sorte que le produit "φA" soit inconnu ; ladite membrane (4) étant exposée sur un côté à l'atmosphère à l'intérieur du dispositif (1), et, sur l'autre, à l'atmosphère de l'environnement ;
- la mesure de la pression établie dans des conditions d'état stable à l'intérieur du dispositif (1), $p_{up}$, et la mesure de la température T et de la pression atmosphérique $p_{atm}$ ; et
- le calcul de la quantité "φA" à l'aide de la formule suivante :

$$\varphi A = \frac{F}{(p_{up} - p_{down})} \qquad (3)$$

où :

$$p_{down} = \gamma \, p_{atm},$$

γ est la fraction volumétrique dans l'air du gaz de mesure utilisé, tandis que toutes les autres quantités sont comme défini ci-dessus.

12. Dispositif pour l'étalonnage de membranes à l'aide de tests de perméation effectués dans un mode "dynamique", constitué par :

- une membrane (4) de perméance φ avec un gaz de mesure donné et une surface exposée A, de telle sorte que le produit "φA" soit inconnu ; ladite membrane (4) étant montée sur ledit dispositif (1) de telle sorte qu'elle soit exposée sur un côté à l'atmosphère à l'intérieur de celui-ci, et exposée sur l'autre côté à pression de l'environnement ;
- une vanne (6) pour la liaison à une alimentation en gaz de mesure ;
- un débitmètre d'écoulement de gaz (11) sur la ligne d'alimentation en gaz de mesure ;
- un manomètre (5) monté sur ledit dispositif (1) et utilisé pour mesurer la pression interne.

13. Dispositif selon la revendication 12, équipé d'un deuxième manomètre (7) pour mesurer la pression de l'environnement.

**14.** Procédé pour l'étalonnage de membranes à l'aide de tests de perméation effectués dans un mode "quasi-statique", comprenant les phases suivantes :

• la liaison d'un récipient étanche vis-à-vis des gaz (2), de volume interne connu, à un dispositif de mesure (1), également de volume interne connu, constitué par une membrane (4) de perméance φ avec un gaz de mesure donné et une surface exposée A, de telle sorte que le produit "φA" soit inconnu, ladite membrane (4) étant exposée sur un côté à l'atmosphère à l'intérieur dudit récipient (2), et, sur l'autre, à l'atmosphère de l'environnement
• la somme du volume interne du récipient (2) et de celui dudit dispositif (1) étant égale à V ;
• la mise sous pression dudit récipient (2) jusqu'à un niveau de pression établi, par introduction du gaz de mesure, ou la dépressurisation dudit récipient (2) jusqu'à un niveau de pression établi, par extraction de l'air ;
• la mesure de la pression interne du récipient (2) à des points dans le temps $t_1$ et $t_2$, la mesure de l'intervalle de temps entre $t_1$ et $t_2$, la mesure de la température T et de la pression atmosphérique $p_{atm}$ ; et
• le calcul de la quantité "φA" à l'aide de la formule suivante :

$$\varphi A = \frac{V}{RT} \frac{\ln \dfrac{p_{up,1} - \gamma\, p_{atm}}{p_{up,2} - \gamma\, p_{atm}}}{t_2 - t_1} \tag{8}$$

où :

$p_{up,1}$ et $p_{up,2}$ sont, respectivement, les valeurs de pression de gaz perméant mesurées à l'intérieur du volume V à des points dans le temps $t_1$ et $t_2$, et toutes les autres quantités sont comme défini ci-dessus.

**15.** Dispositif pour l'étalonnage de membranes à l'aide de tests de perméation dans le mode "quasi-statique" ; ledit dispositif pouvant être relié par l'intermédiaire d'une bride étanche vis-à-vis des gaz (3) à un récipient étanche vis-à-vis des gaz (2) de volume interne connu, et étant constitué par

• une membrane (4) de perméance φ avec un gaz de mesure donné et une surface exposée A, de telle sorte que le produit "φA" soit inconnu ; ladite membrane (4) étant montée sur ledit dispositif (1) de telle sorte qu'elle soit exposée sur un côté à l'atmosphère à l'intérieur du récipient (2), et exposée sur l'autre côté à la pression de l'environnement ;
• une vanne (6) pour la liaison à une alimentation en gaz de mesure ou à un système d'extraction de gaz ; et
• un manomètre (5) monté sur ledit dispositif (1) et utilisé pour mesurer la pression interne dudit récipient (2).

**16.** Dispositif selon la revendication 15, équipé d'un deuxième manomètre (7) et d'un thermomètre (8), pour mesurer la pression et la température de l'environnement, ainsi que d'un minuteur.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8809484 A

- WO 9105510 A